(19) Europäisches Patentamt
European Patent Office
Office européen des brevets

(11) Publication number: 0 574 011 A2

# EUROPEAN PATENT APPLICATION

(21) Application number: 93109395.9

(51) Int. Cl.⁵: G06F 15/21

(22) Date of filing: 11.06.93

(30) Priority: 12.06.92 JP 179388/92

(43) Date of publication of application:
15.12.93 Bulletin 93/50

(84) Designated Contracting States:
DE FR GB IT

(71) Applicant: OMRON CORPORATION
10, Tsuchido-cho,
Hanazono,
Ukyo-ku,
Kyoto-shi, Kyoto 616(JP)

(72) Inventor: Shimizu, Kazuhisa, c/o Intellectual
Property Div.

OMRON CORP.,
20, Igadera,
Shimokaiinji
Nagaokakyo-shi, Kyoto 617(JP)
Inventor: Ejima, Hideji, c/o Intellectual
Property Div.
OMRON CORP.,
20, Igadera,
Shimokaiinji
Nagaokakyo-shi, Kyoto 617(JP)

(74) Representative: WILHELMS, KILIAN &
PARTNER Patentanwälte
Eduard-Schmid-Strasse 2
D-81541 München (DE)

(54) Information processing system and method.

(57) The present invention makes it possible to obtain an objective conclusion, for example, predict the total of business profits even if unknown information are included in a group of information. When no information have been obtained yet with respect to stores B and F in the group of information, unknown information about the store B and unknown information about the store F are respectively replaced with a fuzzy label and a fuzzy number and then, an objective conclusion is derived on the basis of a group of information including such fuzzy information.

Fig. 15

## BACKGROUND OF THE INVENTION

### Field of the Invention

The present invention relates generally to an information processing system and method, and more particularly, to an information processing system and method for predicting, for example, operation (business) total data and the date of completion of manufacturing a product using a spreadsheet calculating tool (program) or the like. More specifically, the present invention relates to an information processing system and method used for performing predetermined operation processing on the basis of a group of information including determinate information and unknown information concerning the results of business or products for each place of business or factories, the dates of delivery of a plurality of parts, and the like to derive an objective conclusion, that is, predicted data.

### Description of the Prior Art

In a company having a lot of places of business, information concerning the results of business for each place of business are gathered and then, business profits are totaled or summed, for example, using a spreadsheet calculating tool, to evaluate the business condition.

Furthermore, in a factory or the like, when a lot of parts are ordered to complete manufacturing a product or a system, information concerning the dates of delivery of the ordered parts are gathered and then, the date of completion of a product or a system, for example, is calculated similarly using a spreadsheet calculating tool.

In the former, however, unless information concerning the results of business for all places of business are gathered, totaling work cannot be started. On the other hand, in the latter, unless information concerning the dates of delivery of ordered parts are obtained from all receivers of the orders, it is difficult to calculate the date of completion.

## SUMMARY OF THE INVENTION

An object of the present invention is to provide an information processing system and method capable of obtaining an objective conclusion, for example, predicting the total of business profits or the date of completion of a system even if unknown information are included in a group of information.

An information processing system according to the present invention comprises a memory storing first data representing determinate information and second data indicating unknown information, replacing means for replacing the second data indicating unknown information with third data representing fuzzy information on the memory, and conclusion deriving means for deriving an objective conclusion using the first data and the third data in the memory.

An information processing method according to the present invention comprises the steps of previously storing first data representing determinate information and second data indicating unknown information in a memory, replacing the second data indicating unknown information with third data representing fuzzy information on the memory, and deriving an objective conclusion using the first data and the third data in the memory.

In a preferred embodiment, the first data and the second data stored in the memory are displayed on a display device.

Furthermore, when the second data is replaced with the third data, data representing the third data is displayed on the display device.

Additionally, when the conclusion is derived, data representing the conclusion is displayed on the display device.

According to the present invention, even if data indicating unknown information is included in a memory, the data indicating unknown information is replaced with data representing fuzzy information, and an objective conclusion is derived from a group of information including the fuzzy information by an operation. Even if all necessary information are not gathered, therefore, it is possible to start totaling work and date calculating work or operation.

In a preferred embodiment, the reliability of the conclusion is calculated and displayed. Consequently, it is possible to accurately evaluate the business condition.

In another preferred embodiment, when there are a plurality of unknown information, data representing a favorable order in which the unknown information are to be determined is generated and displayed.

Third data representing fuzzy information to be replaced is generated in various methods.

As the first method, data representing the fuzzy information and related to the third data is inputted through an input device, and the third data is generated on the basis of the data inputted from the input device.

As the second method, the third data representing fuzzy information is generated using the determinate information stored in the memory.

As the third method, past determinate information is previously stored in a file, and the third data representing fuzzy information is generated using the determinate information stored in at least one of the memory and the file.

As the fourth method, fuzzy reasoning is executed using at least one of the determinate information in the memory and the other determinate information in accordance with a predetermined reasoning rule, to generate the third data representing fuzzy information on the basis of the result obtained by the fuzzy reasoning.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 shows one example of a group of information expressed in the form of a table with respect to the results of business in a plurality of stores;

Fig. 2 shows the results obtained by replacing unknown information in the table shown in Fig. 1 with fuzzy information and deriving a conclusion;

Figs. 3a to 3c show a method of generating fuzzy numbers by the intuition of an expert;

Fig. 4 shows a method of generating a fuzzy label using past information;

Fig. 5 shows a method of generating a fuzzy label using determinate information;

Fig. 6 shows an example of the results obtained by replacing unknown information with fuzzy information;

Fig. 7 is a graph showing a membership function in an antecedent in a fuzzy rule;

Fig. 8 is a graph showing a membership function in a consequent in a fuzzy rule;

Fig. 9 shows the process of executing a reasoning operation;

Fig. 10 shows one example of a group of information expressed in the form of a table with respect to the dates of delivery of ordered parts;

Fig. 11 shows the results obtained by replacing unknown information in the table shown in Fig. 10 with fuzzy information and deriving a conclusion;

Fig. 12 is a block diagram showing a circuit arrangement of an information processing system;

Fig. 13 shows the contents stored in a shared RAM;

Figs. 14a and 14b are flow charts showing the procedure for control carried out by a CPU in the information processing system shown in Fig. 12; and

Fig. 15 is a block diagram showing another circuit arrangement of an information processing system.

DESCRIPTION OF THE PREFERRED EMBODIMENTS

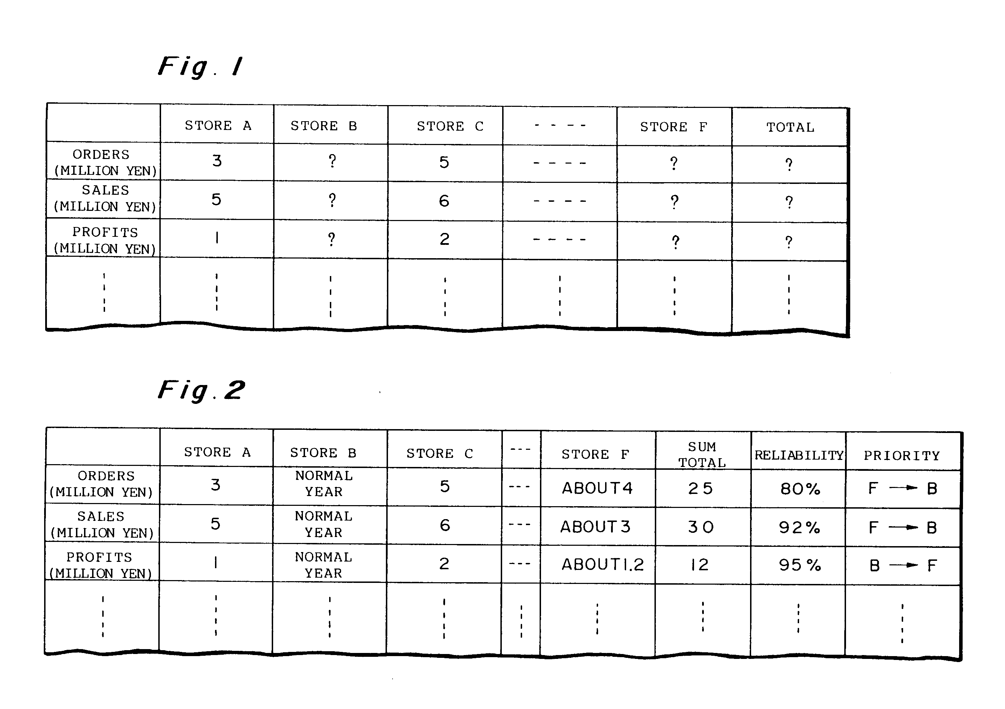

Figs. 1 and 2 are diagrams for explaining the outline of processing performed by an information processing system.

Fig. 1 shows a group of numerical information at a given time point expressed in the form of a table with respect to the results of business in a plurality of stores, and Fig. 2 shows in the form of a table the business totals calculated by the information processing system according to the present invention on the basis of the group of information at this time point. The tables are stored in a memory of the information processing system.

In Fig. 1, A, B, C, ... mean respective stores. With respect to the stores A to F, information concerning the results of business such as amounts of orders received, amounts of sales and amounts of profits are gathered. At this time point, no information have been obtained yet with respect to the stores B and F out of all the stores, and data representing a mark "?" are entered as unknown information in the table.

In Fig. 2, the unknown information about the store B and the unknown information about the store F in the group of information shown in Fig. 1 are respectively replaced with a fuzzy label (indicated by "NORMAL YEAR", which means that the amount is almost same as those of past years, in the figure) and a fuzzy number (indicated by "ABOUT ... YEN" in the figure). Such replacement processing is performed on the basis of data inputted by an operator of the information processing system. The sum total is calculated as an objective conclusion, that is, a predicted value of the business total on the basis of the group of information including such fuzzy information (a fuzzy label and a fuzzy number). In addition, the reliability of the sum total and the order of priorities are together written in the table shown in Fig. 2, as described in detail later.

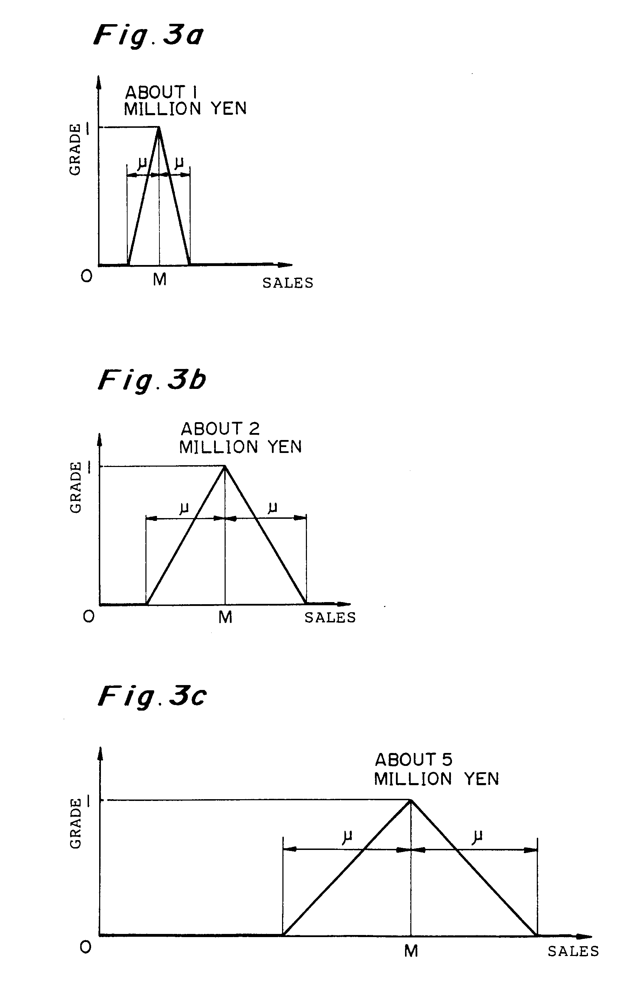

Figs. 3 to 5 illustrate a method of replacing unknown information concerning sales with fuzzy information as an example.

Figs. 3a, 3b and 3c respectively illustrate membership functions representing fuzzy numbers such as amounts of sales "ABOUT 1 MILLION YEN", "ABOUT 2 MILLION YEN", and "ABOUT 5 MILLION YEN" and generated on the basis of the intuition or the experience of an expert. M represents the average value, and $\mu$ represents the standard deviation. Such membership functions (including membership functions representing fuzzy numbers such as "ABOUT 3 MILLION YEN" and "ABOUT 4 MILLION YEN" in addition to the foregoing) are previously generated and are stored in the memory of the information processing system.

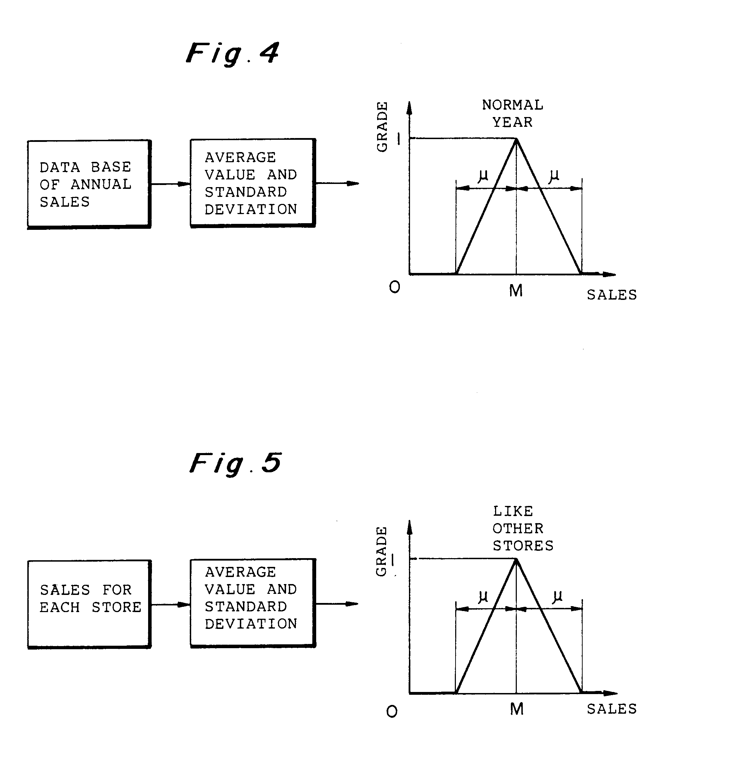

Fig. 4 illustrates a membership function having a fuzzy label "NORMAL YEAR" which is generated using past information. The average value M of the monthly sales and the standard deviation $\mu$ obtained by statistically processing data representing the monthly sales are calculated on the basis of a data base of the annual sales in a given store. A membership function having a vertex at a position where the average value M is positioned and having a spread corresponding to the standard deviation $\mu$ on the positive and negative sides centered with respect to the average value M is automatically generated.

Fig. 5 illustrates a membership function having a fuzzy label "LIKE OTHER STORES". The average value M of the monthly sales in stores (excluding stores having unknown sales) other than a pertinent store and the standard deviation $\mu$ thereof are calculated. Similarly, a membership function having a vertex at a position where the average value M is positioned and having a spread corresponding to the standard deviation $\mu$ on the positive and negative sides centered with respect to the average value M is automatically generated.

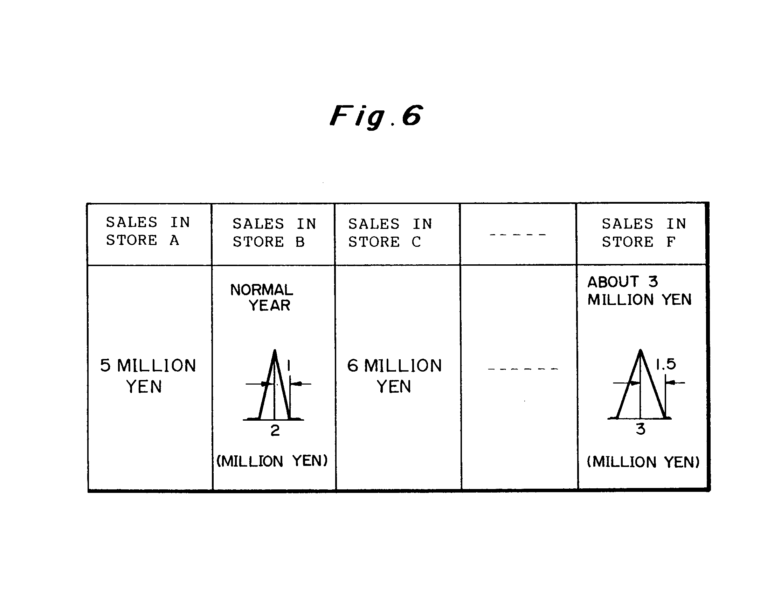

Fig. 6 shows an example of the results obtained by replacing unknown information with fuzzy information using any one of the above described methods with respect to the stores B and F having unknown sales.

The fuzzy label "NORMAL YEAR" is inputted with respect to the sales in the store B, and the average value M of the sales and the standard deviation $\mu$ thereof are calculated, to be respectively 2 million yen and 1 million yen. On the other hand, a fuzzy number "ABOUT 3 MILLION YEN" is selected with respect to the sales in the store F, and the average value M of the sales and the standard deviation u thereof are respectively 3 million yen and 1.5 million yen.

The gross sales (sum total) T are obtained by adding the respective determinate sales in the stores A, C and the other stores and the respective average values of the sales in the stores B and F. In this example, the gross sales T are T = 5 million + 2 million + 6 million + ... + 3 million + ... = 30 million yen.

The reliability K of the result of the calculation of the gross sales T is given by the following equation (1) if the total of all the standard deviations $\mu$ is taken as $\Sigma\mu$:

$$K = \frac{T - \sum \mu}{T} \times 100 \ (\%) \quad \ldots \ (1)$$

In the concrete example shown in Fig. 6, therefore, the gross sales T are 30 million yen and the total of the standard deviations $\Sigma\mu$ is $\Sigma\mu$ = 1 million + 1.5 million = 2.5 million yen, so that the reliability K is about 92 %.

The reliability of a numerical value represented by a membership function is expressed by the spread of the membership function. The wider the spread is, the lower the reliability is. That is, the larger the standard deviation is, the lower the reliability is. Consequently, the reliability K can be improved by early determining unknown information which is replaced with fuzzy information having a large standard deviation $\mu$. The order of priorities for the determination is the store F and the store B.

In the table shown in Fig. 2, the order in which unknown information are to be determined is indicated by an arrow so as to indicate the order of priorities.

Although description was made of only the sales, the same is true for the other items, that is, orders and profits. Specifically, suitable fuzzy information are set with respect to the stores B and F, to obtain the business totals shown in Fig. 2.

Description is now made of another method of replacing unknown information concerning the sales in a given store with fuzzy information on the basis of data about the other stores. This method utilizes fuzzy reasoning. Specifically, a reasoning operation is executed using determinate information about the other stores and past information about a pertinent store in accordance with a predetermined fuzzy rule, to automatically generate fuzzy information (a membership function) representing the monthly sales in the pertinent store.

Concrete examples of the fuzzy rule referred to as the "If ..., then ..." rule for reasoning the sales in the store F will be listed.

(1) If the sales in the store A are slightly increased and the sales in the store C are not changed, the sales in the store F are slightly increased.

(2) If the sales in the store A are moderately increased and the sales in the store C are slightly decreased, the sales in the store F are moderately increased.

(3) If the sales in the store A are significantly increased and the sales in the store C are moderately decreased, the sales in the store F are moderately increased.

(4) If the sales in the store A are significantly decreased and the sales in the store C are significantly decreased, the sales in the store F are significantly decreased.

(5) If the sales in the store A are moderately increased and the sales in the store C are not changed, the sales in the store F are slightly increased.

Linguistic information "significantly decreased" is expressed by a fuzzy label NL. Similarly, "moderately decreased", "slightly decreased", "not changed", "slightly increased", "moderately increased" and "significantly increased" are respectively expressed by NM, NS, ZR, PS, PM and PL.

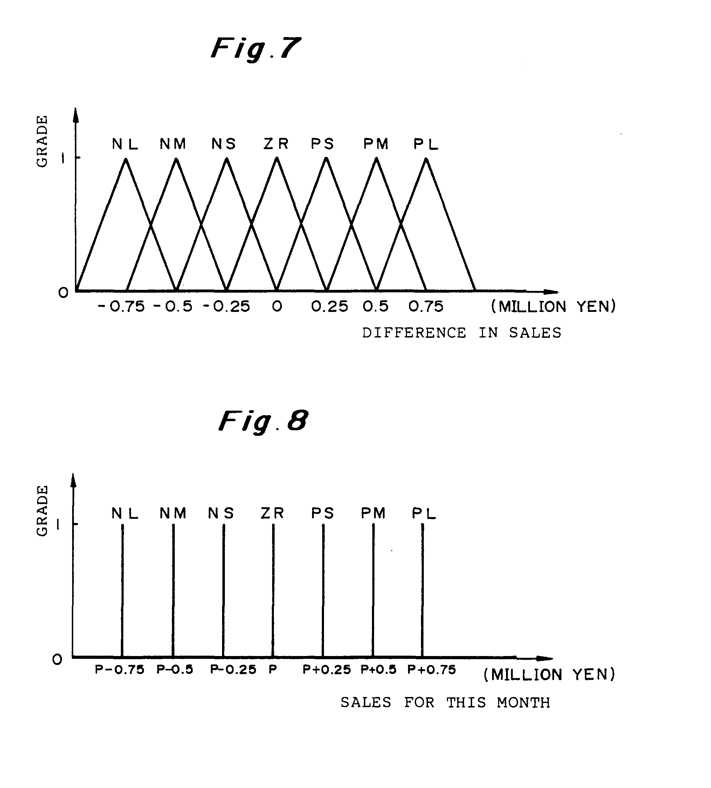

A membership function in an antecedent in the above described "If ..., then ..." rule is shown in Fig. 7, and a membership function in a consequent therein is shown in Fig. 8.

In Fig. 7, the horizontal axis represents the difference between the sales for this month and the sales for the last month in the other store. In Fig. 8, the horizontal axis represents the sales for this month in the pertinent store on the basis the sales for the last month P. The membership function in the consequent is expressed by a singleton.

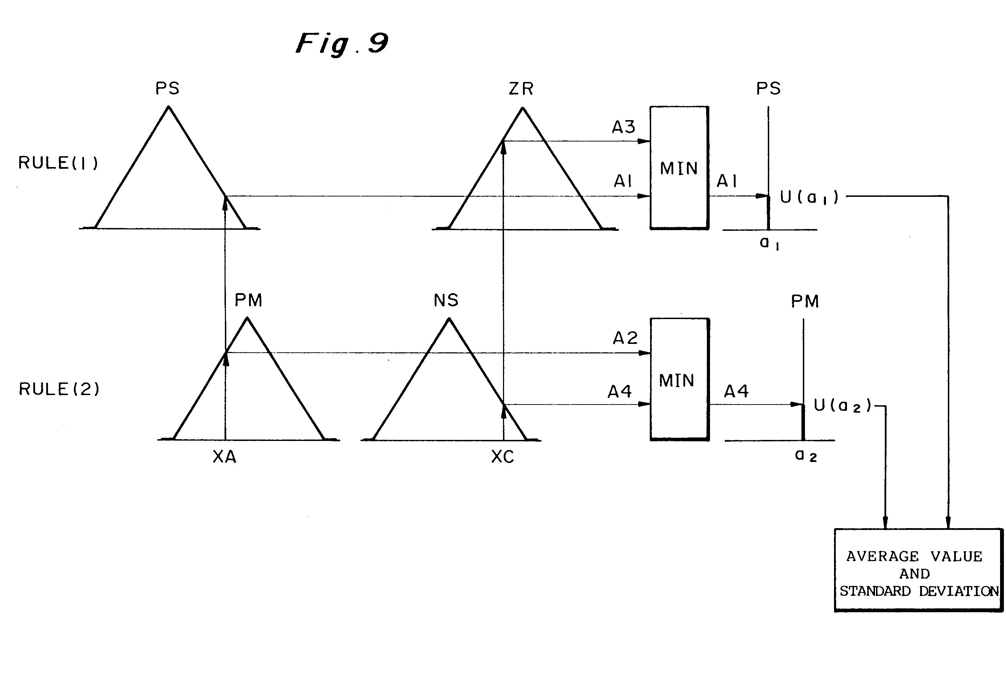

Fig. 9 shows the process of executing fuzzy reasoning in accordance with the above described rules. The fuzzy reasoning will be described only with respect to the rules (1) and (2). A MIN operation is used for an "and" operation in the antecedent.

Let the difference in the sales (a value obtained by subtracting the sales for the last month from the sales for this month) in the store A and the difference in the sales in the store C be XA and XC, respectively. In the rule (1), grades or membership in a case where the input values XA and XC are respectively applied to the membership functions PS and ZR in the antecedent shall be A1 and A3. The result of the MIN operation of the grades (membership in the antecedent) is A1 (A3 > A1).

Similarly, in the rule (2), when the input values XA and XC are respectively applied to the membership functions PM sand NS in the antecedent, grades A2 and A4 are obtained. The result of the MIN operation of the grades is A4 (A2 > A4). Membership in the antecedent is found in the same manner with respect to the other rule.

The height (grade) of the membership function in the consequent is determined by the membership in the antecedent. For example, the grade of the membership function PS in the consequent in the rule (1) is A1, which is expressed as U $(a_1)$, where $a_1$ is a value on the horizontal axis on which the membership function PS is positioned ($a1 = P + 0.25$ million yen in Fig. 8).

The average value M and the standard deviation $\mu$ are calculated by the following equation using the grade U $(ai)$ ($i = 1$ to N ; N is the number of rules) thus obtained:

$$M = \frac{\displaystyle\sum_{i-1}^{N} a_i \cdot U(a_i)}{\displaystyle\sum_{i=1}^{N} U(a_i)} \qquad \ldots (2)$$

$$\mu = \sqrt{\left| \frac{1}{N} \left\{ \sum_{i-1}^{N} U(a_i)^2 \right\} - \left\{ \frac{1}{N} \sum_{i=1}^{N} U(a_i) \right\}^2 \right|} \qquad \ldots (3)$$

The sales for this month in the store F are expressed by the membership function defined by the above described average value M and standard deviation $\mu$. The sales are displayed by a fuzzy number (for example, "ABOUT M YEN" using the average value M).

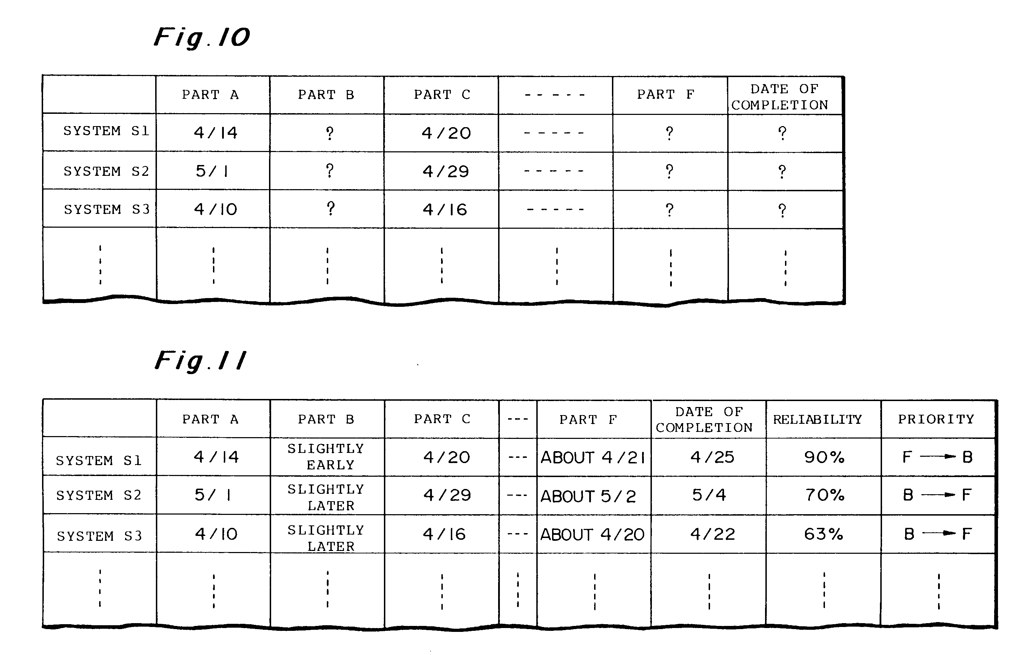

Fig. 10 shows a group of information at a given time point expressed in the form of a table with respect to the dates of delivery of a plurality of ordered parts A to F which are required to manufacture systems S1, S2, S3, ..., and Fig. 11 shows in the form of a table the dates of completion of the systems S1, S2, S3, ... which are calculated by the information processing system according to the present invention on the basis of the group of information at this time point.

In an example shown in Fig. 10, no information have been obtained yet with respect to the parts B and F out of all the ordered parts, and marks "?" are entered as unknown information in the table.

In Fig. 11, the unknown information concerning the part B in the group of information shown in Fig. 10 is replaced with a fuzzy label (expressed by "SLIGHTLY EARLIER" or "SLIGHTLY LATER" in the figure), and the unknown information concerning the part F is replaced with a fuzzy number (expressed by "ABOUT ..." in the figure). An objective conclusion, that is, the predicted date of completion of each of the systems is calculated from the group of information including such fuzzy information. In addition, the reliability of each of the results of the calculation and the order of priorities are together written in the table shown in Fig. 11.

Fuzzy information "slightly earlier" or "slightly later" is determined on the basis of the determinate date of delivery. For example, the determinate dates of delivery of the other parts are statistically processed, thereby to calculate the average value of the dates of delivery and the standard deviation thereof. The fuzzy information is "slightly earlier" if the date of delivery is earlier than the average date of delivery by days corresponding to the standard deviation, while being "slightly later" if it is later than the average date of delivery by days corresponding to the standard deviation.

A method of replacing unknown information concerning the date of delivery with a fuzzy label or a fuzzy number is the same as that described above.

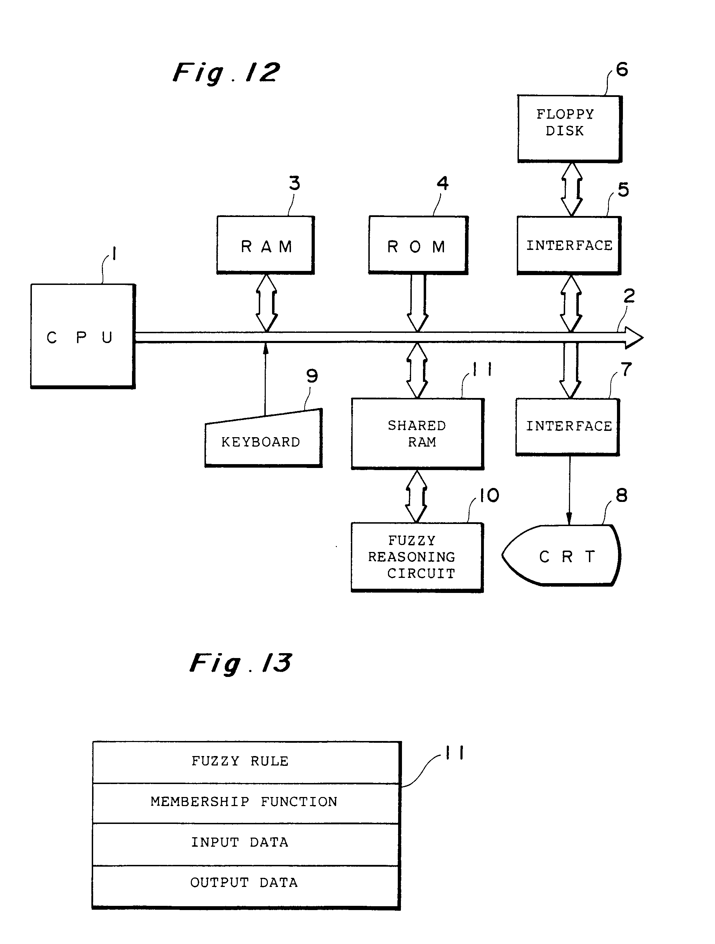

Fig. 12 shows a circuit arrangement of the information processing system for replacing unknown information with fuzzy information and deriving an objective conclusion.

In the circuit arrangement shown in Fig. 12, a RAM 3 and a ROM 4 are connected to a CPU 1 which plays a major part in control and operations through a bus 2, and a floppy disk 6 and a CRT 8 are also connected to the CPU 1 respectively through interfaces 5 and 7.

The ROM 4 stores programs, and the RAM 3 stores predetermined fuzzy rules and membership functions, and the like in addition to determinate information. The floppy disk 6 stores past information.

The CRT 8 is for displaying information entered through keys and the result of an operation, which displays a group of information including determinate information and unknown information in the form of tables as shown in Figs. 1 and 10 before the operation, while displaying a group of information including replaced fuzzy information and the result of the operation in the form of tables as shown in Figs. 2 and 11 after the operation. A key board 9 is for keying determinate information, fuzzy information to be replaced and the like.

A fuzzy reasoning circuit (a fuzzy chip) 10 is for executing the above described fuzzy reasoning operation. A shared RAM 11 is provided with areas to which a fuzzy rule and membership functions required for the reasoning operation are written, areas to which input and output values (data) are written, and the like, as shown in Fig. 13.

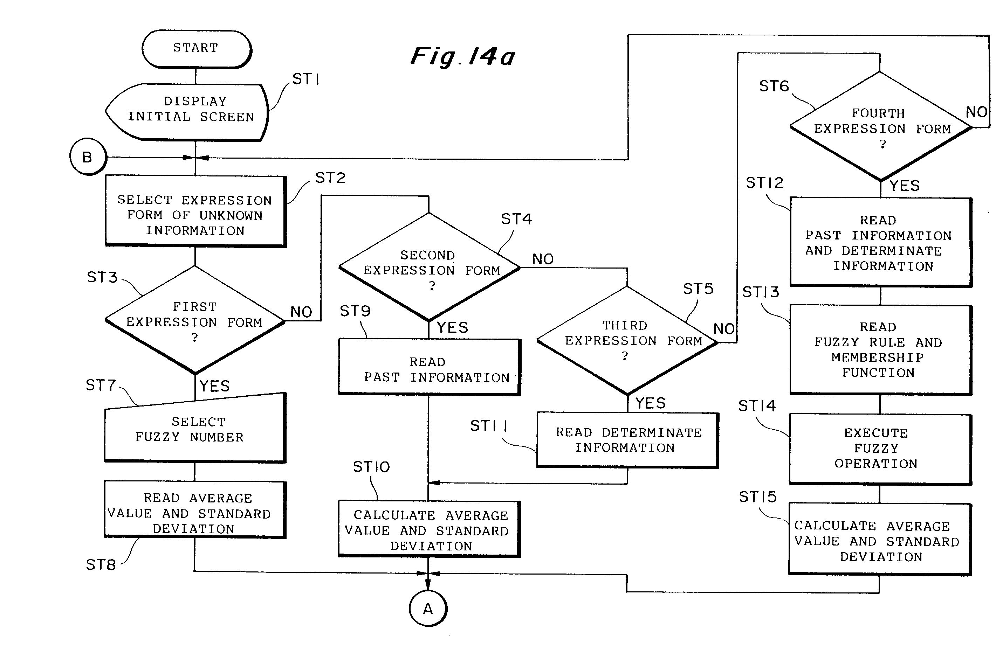

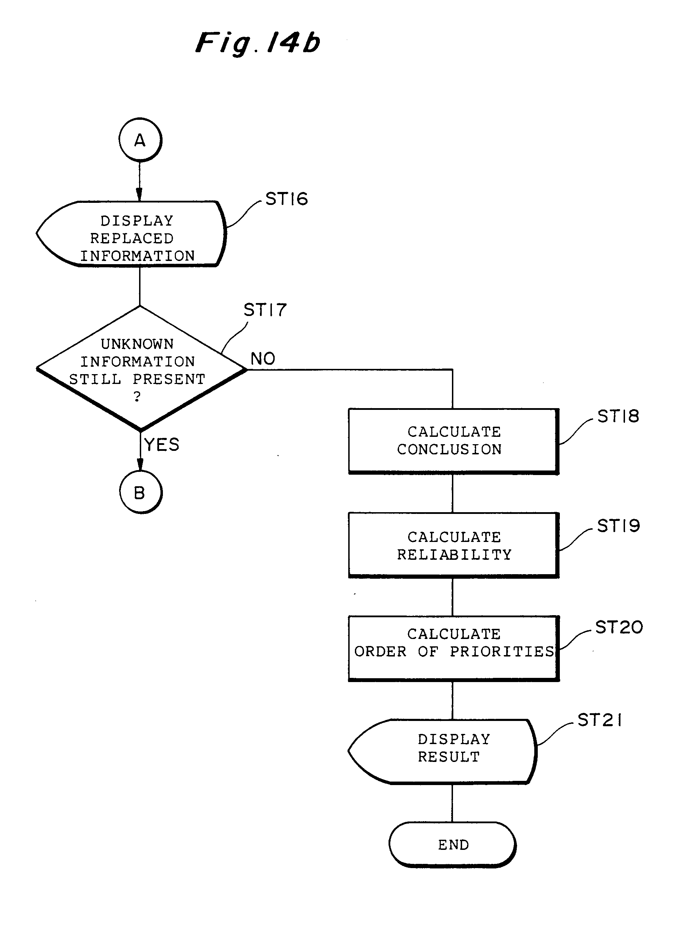

Figs. 14a and 14b show the procedure for processing performed by the CPU 1 in the step 1 (referred to as "ST1" in the figure) to the step 21.

In the step 1, the CPU 1 displays as an initial display screen a group of information in the form of tables as shown in Figs. 1 and 10, and displays a menu for selecting fuzzy information to express unknown information.

In the present embodiment, a first expression form for expressing unknown information by such a fuzzy number that a membership function is previously generated on the basis of the intuition and the experience of an expert (see Figs. 3a to 3c), a second expression form for expressing unknown information by a fuzzy label representing a membership function generated using past information (see Fig. 4), a third expression form for expressing unknown information by a fuzzy label representing a membership function generated using currently determinate information (see Fig. 5), and a fourth expression form for expressing unknown information by a membership function generated by a reasoning operation (see Figs. 7 to 9) have been prepared. An operator can select any one of the first to fourth expression forms.

If an expression form expressing the first unknown information is selected in the subsequent step 2, the judgement in the step 3 is "YES" if it is the first expression form. The operator selects any one of fuzzy numbers as shown in, for example, Figs. 3a to 3c in the step 7. The CPU 1 reads the average value M and the standard deviation $\mu$ with respect to the fuzzy number in a work area from a storage area in the RAM 3 by this selecting operation and then, displays the fuzzy number (for example, a character "ABOUT 1 MILLION YEN") in a corresponding portion in the display screen of the CRT 8 (steps 8 and 16).

If the second expression form is selected in the step 2 and the operator inputs a fuzzy label (for example, "NORMAL YEAR"), the judgment in the step 4 is "YES". Consequently, the CPU 1 reads past information from the floppy disk 6 and calculates the average value M and the standard deviation u in accordance with the inputted fuzzy label to store the calculated values in the work area in the RAM 3 and then, displays the fuzzy label (for example, a character "NORMAL YEAR") in a corresponding portion in the display screen of the CRT 8 (steps 9, 10 and 16).

If the third expression form is selected in the step 2 and the operator inputs a fuzzy label (for example, "LIKE OTHER STORES"), the judgment in the step 5 is "YES". Consequently, the CPU 1 reads currently determinate information from the RAM 3 and calculates the average value M and the standard deviation $\mu$ in accordance with the inputted fuzzy label to store the calculated values in the work area in the RAM 3 and then, displays the fuzzy label (for example, a character "LIKE OTHER STORES") in a corresponding portion in the display screen of the CRT 8 (steps 11, 10 and 16).

If the fourth expression form is selected in the step 2, the judgment in the step 6 is "YES". Consequently, the CPU 1 respectively reads the past information and the currently determinate information from the floppy disk 6 and the RAM 3 in the step 12 to write the information in the shared RAM 11, and further reads fuzzy rules and membership functions from the RAM 3 to write the fuzzy rules and the membership functions in the shared RAM 11 in the subsequent step 13.

The CPU 1 causes the fuzzy chip 10 to execute a fuzzy reasoning operation to calculate the average value M and the standard deviation $\mu$ and then, stores the calculated values in the work area in the RAM 3, and displays a fuzzy number (for example, "ABOUT M YEN") in a corresponding portion in the display screen of the CRT 8 (steps 14, 15 and 16).

If any one of the expression forms is selected sequentially with respect to all unknown information so that the same procedure is repeatedly carried out, the judgment in the step 17 is "NO". Consequently, the program proceeds to the step 18. The CPU 1 calculates an objective conclusion using information set in the work area in the RAM 3 (for example, the sum total in the example shown in Fig. 2) in the step 18, calculates the reliability K of the calculated value in the subsequent step 19, further judges the order of priorities in the subsequent step 20 and then, displays the final result on the CRT 8 in the form of tables as shown in Figs. 2 or 11 (step 21).

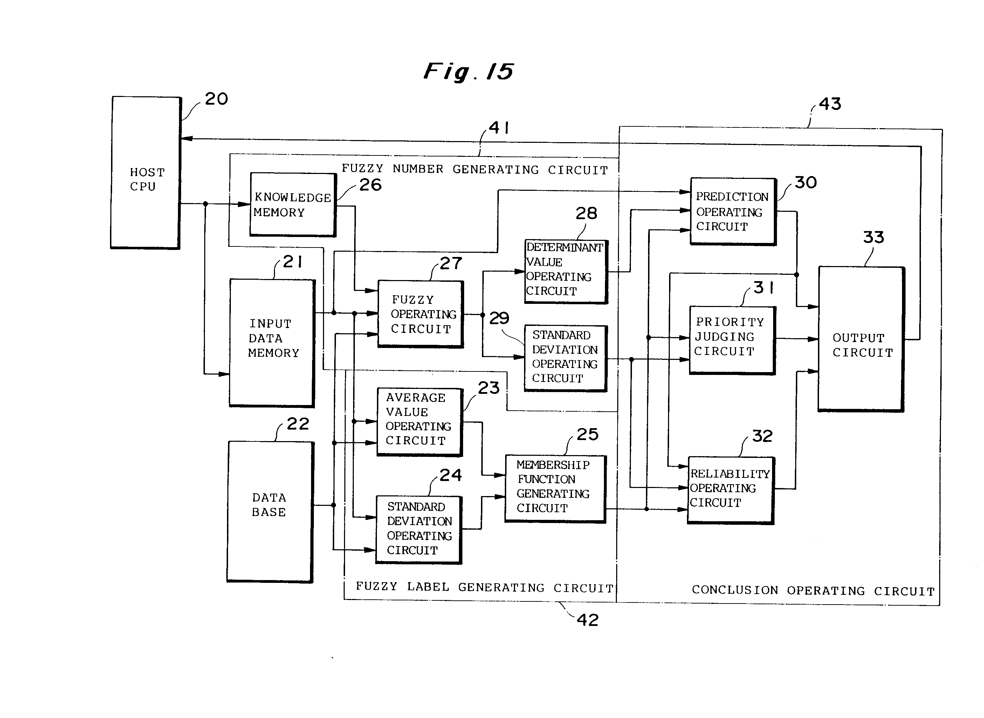

Fig. 15 shows a circuit arrangement for performing the above described processing by hardware. The circuit arrangement comprises a host CPU 20, an input data memory 21, a data base (memory) 22, a fuzzy number generating circuit 41, a fuzzy label generating circuit 42, and a conclusion operating circuit 43.

The above described fuzzy number generating circuit 41 is a circuit for replacing unknown information with a fuzzy number, and comprises a fuzzy operating (reasoning) circuit 27, a determinant value operating circuit 28, and a standard deviation operating circuit 29.

The above described fuzzy label generating circuit 42 is a circuit for replacing unknown information with a fuzzy label, and comprises an average value operating circuit 23, a standard deviation operating circuit 24, and a membership function generating circuit 25.

The above described conclusion operating circuit 43 is a circuit for deriving an objective conclusion from a group of information, and comprises a prediction operating circuit 30, a priority judging circuit 31, a reliability operating circuit 32, and an output circuit 33.

7

The above described input data memory 21 is for storing determinate information given from the host CPU 20. The determinate information is given to the fuzzy operating circuit 27 in the fuzzy number generating circuit 41, the average value operating circuit 23 and the standard deviation operating circuit 24 in the fuzzy label generating circuit 42, and the prediction operating circuit 30 in the conclusion operating circuit 43.

The above described data base 22 is for holding past information. The past information is given to the fuzzy operating circuit 27 in the fuzzy number generating circuit 41, and the average value operating circuit 23 and the standard deviation operating circuit 24 in the fuzzy label generating circuit 42.

The average value operating circuit 23 and the standard deviation operating circuit 24 in the fuzzy label generating circuit 42 respectively calculate the average value M and the standard deviation $\mu$ for generating a membership function using either one or both of the determinate information given from the input data memory 21 in accordance with the inputted fuzzy label and the past information given from the data base 22 in accordance with the inputted fuzzy label, and apply the results of the calculation to the membership function generating circuit 25. Consequently, membership functions representing fuzzy labels in the above described second and third expression forms are generated.

The membership function generating circuit 25 holds the average value M applied from the average value operating circuit 23 and the standard deviation $\mu$ applied from the standard deviation operating circuit 24 as data constituting the membership function, and applies the average value M to the prediction operating circuit 30 in the conclusion operating circuit 43 and applies the standard deviation $\mu$ to the priority judging circuit 31 and the reliability operating circuit 32 in the conclusion operating circuit 43.

A knowledge memory 26 in the fuzzy number generating circuit 41 receives predetermined knowledge data concerning fuzzy rules and membership functions fed from the host CPU 20 and holds the same, to output the knowledge data to the fuzzy operating circuit 27.

The fuzzy operating circuit 27 respectively receives the determinate information from the input data memory 21, the past information from the data base 22, and the knowledge data from the knowledge memory 26, to execute a fuzzy reasoning operation, and applies data representing the grade U $(a_i)$ of the membership function in the consequent which is expressed by a singleton and the position $a_i$ thereof (see Fig. 9) to the determinant value operating circuit 28 and the standard deviation operating circuit 29 as the results of the fuzzy operation.

The determinant value operating circuit 28 and the standard deviation operating circuit 29 respectively calculate the average value M and the standard deviation $\mu$ by the foregoing equations (2) and (3) using the input data fed from the fuzzy operating circuit 27, and output the average value M to the prediction operating circuit 30 in the conclusion operating circuit 43 and the standard deviation $\mu$ to the priority judging circuit 31 and the reliability operating circuit 32 in the conclusion operating circuit 43. Consequently, a fuzzy number in the forth expression form is obtained.

The prediction operating circuit 30 in the conclusion operating circuit 43 respectively receives the determinate information from the input data memory 21 and the average values M from the membership function generating circuit 25 in the fuzzy label generating circuit 42 and the determinant value operating circuit 28 in the fuzzy number generating circuit 41, adds the determinate information and the average values M to calculate the sum total (a predicted value) if the business total, for example, is an object, and outputs the calculated value to the reliability operating circuit 32 and the output circuit 33.

The priority judging circuit 31 receives the standard deviations $\mu$ from the standard deviation operating circuit 29 and the membership function generating circuit 25 to judge which of the standard deviations is larger, and considers the larger standard deviation $\mu$ as a higher priority one to output data representing the order of priorities to the output circuit 33.

The reliability operating circuit 32 respectively receives the standard deviations $\mu$ from the membership function generating circuit 25 in the fuzzy label generating circuit 42 and the standard deviation operating circuit 29 in the fuzzy number generating circuit 41 and the predicted value (the sum total) from the prediction operating circuit 30, executes the operation in the foregoing equation (1) to calculates the reliability K, and outputs the calculated value to the output circuit 33.

The output circuit 33 receives and holds the results of the operation and the results of the judgment from the prediction operating circuit 30, the priority judging circuit 31 and the reliability operating circuit 32, and outputs as a conclusion the predicted value, the order of priorities and the reliability to the host CPU 20.

In the information processing system of the above described construction, the predetermined knowledge data and the determinate information are respectively inputted to the knowledge memory 26 and the input data memory 21 from the host CPU 20 and are stored therein. The fuzzy label is inputted from an input device in the host CPU 20.

When a method of replacing unknow information with a fuzzy label using past information is then selected, the past information is outputted from the data base 22 in accordance with the inputted fuzzy label. When a method of replacing unknown information with a fuzzy label using determinate information is selected, the determinate information is outputted from the input data memory 21 in accordance with the inputted fuzzy label. Furthermore, when the past information and the currently determinate information are required, the information are respectively outputted from the data base 22 and the input data memory 21. Each of the outputted information is inputted to the average value operating circuit 23 and the standard deviation operating circuit 24 in the fuzzy label generating circuit 42, to respectively calculate the average value M and the standard deviation $\mu$. The calculated average value M and the calculated standard deviation $\mu$ are outputted to the membership function generating circuit 25 and are held therein, and the average value M is further outputted to the prediction operating circuit 30.

On the other hand, when a method of replacing unknown information with a fuzzy number through fuzzy reasoning is selected, the determinate information, the past information, and the knowledge data (fuzzy rules and membership functions) are respectively applied from the input data memory 21, the data base 22, and the knowledge memory 26 to the fuzzy operating circuit 27 in the fuzzy number generating circuit 41, to execute a fuzzy reasoning operation. The result of the operation is outputted to the determinant value operating circuit 28 and the standard deviation operating circuit 29, to respectively calculate the average value M and the standard deviation $\mu$, and the calculated average value M is outputted to the prediction operating circuit 30.

The foregoing operation is repeatedly performed until there is no unknown information, and the standard deviations $\mu$ are respectively outputted from the membership function generating circuit 25 and the standard deviation operating circuit 29 to each of the priority judging circuit 31 and the reliability operating circuit 32 at the time point when all information have been calculated.

The prediction operating circuit 30 then calculates the predicted value from the input information, and the priority judging circuit 31 determines the order of priorities. If the predicted value calculated by the prediction operating circuit 30 is applied to the reliability operating circuit 32, the reliability operating circuit 32 calculates the reliability K using the input information (the predicted value and the standard deviations $\mu$), and outputs the reliability K, the predicted value and the order of priorities to the output circuit 33. The output circuit 33 holds the reliability K, the predicted value and the order of priorities and further outputs them to the host CPU 20.

Although description was made of a method of replacing unknown information with a fuzzy label using past information or determinate information, a method of replacing unknown information with a fuzzy number using the intuition of an expert (in the first expression form) may be used. In this case, the average value M and the standard deviation u for defining the inputted fuzzy number are directly applied to the membership function generating circuit 25 from the host CPU 20 and are held therein.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An information processing system comprising:
   a memory storing first data representing determinate information and second data indicating unknown information;
   replacing means for replacing said second data indicating unknown information with third data representing fuzzy information on said memory; and
   conclusion deriving means for deriving an objective conclusion using the first data and the third data in said memory.

2. The system according to claim 1, further comprising a display device on which the first data and the second data stored in said memory are displayed.

3. The system according to claim 2, wherein said display device displays, when the second data is replaced with the third data, data representing the third data.

4. The system according to claim 3, wherein said display device displays, when the conclusion is derived by said conclusion deriving means, data representing the conclusion.

5. The system according to claim 1, further comprising reliability calculating means for calculating the reliability of the conclusion derived by said conclusion deriving means.

6. The system according to claim 1, further comprising priority assigning means for generating, when there are a plurality of unknown information, data representing a favorable order in which the unknown information are to be determined.

7. The system according to claim 1, further comprising an input device for inputting data representing said fuzzy information and related to said third data,
    said replacing means generating said third data on the basis of the data inputted from said input device.

8. The system according to claim 1, wherein said replacing means generates the third data representing fuzzy information using the determinate information stored in said memory.

9. The system according to claim 1, further comprising a file storing past determinate information,
    said replacing means generating the third data representing fuzzy information using the determinate information stored in at least one of said memory and the file.

10. The system according to claim 1, wherein said replacing means executes fuzzy reasoning using at least one of the determinate information in said memory and the other determinate information in accordance with a predetermined reasoning rule, to generate the third data representing fuzzy information on the basis of the result obtained by the fuzzy reasoning.

11. An information processing method comprising the steps of:
    previously storing first data representing determinate information and second data indicating unknown information in a memory;
    replacing said second data indicating unknown information with third data representing fuzzy information on said memory; and
    deriving an objective conclusion using the first data and the third data in said memory.

12. The method according to claim 11, wherein the first data and the second data stored in said memory are displayed on a display device.

13. The method according to claim 12, wherein when the second data is replaced with the third data, data representing the third data is displayed on the display device.

14. The method according to claim 13, wherein when the conclusion is derived, data representing the conclusion is displayed on the display device.

15. The method according to claim 11, wherein the reliability of the derived conclusion is calculated.

16. The method according to claim 11, wherein when there are a plurality of unknown information, data representing a favorable order in which the unknown information are to be determined is generated.

17. The method according to claim 11, wherein said third data is generated in response to input of data representing said fuzzy information and related to said third data from an input device on the basis of the data inputted from said input device.

18. The method according to claim 11, wherein the third data representing fuzzy information is generated using the determinate information stored in said memory.

19. The method according to claim 11, wherein past determinate information is previously stored in a file, and the third data representing fuzzy information is generated using the determinate information stored in at least one of said memory and the file.

20. The method according to claim 11, wherein fuzzy reasoning is executed using at least one of the determinate information in said memory and the other determinate information in accordance with a

10

predetermined reasoning rule, to generate the third data representing fuzzy information on the basis of the result obtained by the fuzzy reasoning.

**Fig. 1**

| | STORE A | STORE B | STORE C | - - - | STORE F | TOTAL |
|---|---|---|---|---|---|---|
| ORDERS (MILLION YEN) | 3 | ? | 5 | - - - | ? | ? |
| SALES (MILLION YEN) | 5 | ? | 6 | - - - | ? | ? |
| PROFITS (MILLION YEN) | 1 | ? | 2 | - - - | ? | ? |
| - - - - | - - - - | - - - - | - - - - | - - - - | - - - - | - - - - |

**Fig. 2**

| | STORE A | STORE B | STORE C | - - - | STORE F | SUM TOTAL | RELIABILITY | PRIORITY |
|---|---|---|---|---|---|---|---|---|
| ORDERS (MILLION YEN) | 3 | NORMAL YEAR | 5 | - - - | ABOUT 4 | 25 | 80% | F → B |
| SALES (MILLION YEN) | 5 | NORMAL YEAR | 6 | - - - | ABOUT 3 | 30 | 92% | F → B |
| PROFITS (MILLION YEN) | 1 | NORMAL YEAR | 2 | - - - | ABOUT 1.2 | 12 | 95% | B → F |
| - - - - | - - - - | - - - | - - - - | - - - - | - - - - | - - - - | - - - - | - - - - |

# Fig.3a

ABOUT I
MILLION YEN

# Fig.3b

ABOUT 2
MILLION YEN

# Fig.3c

ABOUT 5
MILLION YEN

## *Fig.4*

DATA BASE OF ANNUAL SALES → AVERAGE VALUE AND STANDARD DEVIATION →

GRADE / NORMAL YEAR, $\mu$, $\mu$, O, M, SALES

## *Fig.5*

SALES FOR EACH STORE → AVERAGE VALUE AND STANDARD DEVIATION →

GRADE / LIKE OTHER STORES, $\mu$, $\mu$, O, M, SALES

14

# Fig.6

| SALES IN STORE A | SALES IN STORE B | SALES IN STORE C | ----- | SALES IN STORE F |
|---|---|---|---|---|
| 5 MILLION YEN | NORMAL YEAR<br><br>(MILLION YEN) | 6 MILLION YEN | ------ | ABOUT 3 MILLION YEN<br><br>(MILLION YEN) |

EP 0 574 011 A2

## *Fig.7*

GRADE

NL   NM   NS   ZR   PS   PM   PL

-0.75  -0.5  -0.25   0   0.25  0.5  0.75   (MILLION YEN)

DIFFERENCE IN SALES

## *Fig.8*

GRADE

NL   NM   NS   ZR   PS   PM   PL

P-0.75  P-0.5  P-0.25   P   P+0.25  P+0.5  P+0.75   (MILLION YEN)

SALES FOR THIS MONTH

Fig. 9

EP 0 574 011 A2

## Fig.10

|  | PART A | PART B | PART C | - - - - - | PART F | DATE OF COMPLETION |
|---|---|---|---|---|---|---|
| SYSTEM S1 | 4/14 | ? | 4/20 | - - - - - | ? | ? |
| SYSTEM S2 | 5/1 | ? | 4/29 | - - - - - | ? | ? |
| SYSTEM S3 | 4/10 | ? | 4/16 | - - - - - | ? | ? |
| ⋮ | ⋮ | ⋮ | ⋮ | ⋮ | ⋮ | ⋮ |

## Fig.11

|  | PART A | PART B | PART C | --- | PART F | DATE OF COMPLETION | RELIABILITY | PRIORITY |
|---|---|---|---|---|---|---|---|---|
| SYSTEM S1 | 4/14 | SLIGHTLY EARLY | 4/20 | --- | ABOUT 4/21 | 4/25 | 90% | F ⟶ B |
| SYSTEM S2 | 5/1 | SLIGHTLY LATER | 4/29 | --- | ABOUT 5/2 | 5/4 | 70% | B ⟶ F |
| SYSTEM S3 | 4/10 | SLIGHTLY LATER | 4/16 | --- | ABOUT 4/20 | 4/22 | 63% | B ⟶ F |
| ⋮ | ⋮ | ⋮ | ⋮ | ⋮ | ⋮ | ⋮ | ⋮ | ⋮ |

## Fig. 12

FLOPPY
DISK — 6

RAM — 3

ROM — 4

INTERFACE — 5

CPU — 1

2

KEYBOARD — 9

SHARED
RAM — 11

INTERFACE — 7

FUZZY
REASONING
CIRCUIT — 10

CRT — 8

## Fig. 13

| FUZZY RULE | — 11 |
|---|---|
| MEMBERSHIP FUNCTION | |
| INPUT DATA | |
| OUTPUT DATA | |

Fig. 14a

START

ST1 — DISPLAY INITIAL SCREEN

B

ST2 — SELECT EXPRESSION FORM OF UNKNOWN INFORMATION

ST3 — FIRST EXPRESSION FORM ? — NO

YES

ST7 — SELECT FUZZY NUMBER

ST8 — READ AVERAGE VALUE AND STANDARD DEVIATION

ST4 — SECOND EXPRESSION FORM ? — NO

YES

ST9 — READ PAST INFORMATION

ST10 — CALCULATE AVERAGE VALUE AND STANDARD DEVIATION

ST5 — THIRD EXPRESSION FORM ? — NO

YES

ST11 — READ DETERMINATE INFORMATION

ST6 — FOURTH EXPRESSION FORM ? — NO

YES

ST12 — READ PAST INFORMATION AND DETERMINATE INFORMATION

ST13 — READ FUZZY RULE AND MEMBERSHIP FUNCTION

ST14 — EXECUTE FUZZY OPERATION

ST15 — CALCULATE AVERAGE VALUE AND STANDARD DEVIATION

A

EP 0 574 011 A2

## Fig. 14b

ST16 DISPLAY REPLACED INFORMATION

ST17 UNKNOWN INFORMATION STILL PRESENT ?

NO

YES

ST18 CALCULATE CONCLUSION

ST19 CALCULATE RELIABILITY

ST20 CALCULATE ORDER OF PRIORITIES

ST21 DISPLAY RESULT

END

# Fig. 15

**FUZZY NUMBER GENERATING CIRCUIT** *(41)*

**HOST CPU** *(20)*

**KNOWLEDGE MEMORY** *(26)*

**INPUT DATA MEMORY** *(21)*

**DATA BASE** *(22)*

**FUZZY OPERATING CIRCUIT** *(27)*

**DETERMINANT VALUE OPERATING CIRCUIT** *(28)*

**STANDARD DEVIATION OPERATING CIRCUIT** *(29)*

**AVERAGE VALUE OPERATING CIRCUIT** *(23)*

**STANDARD DEVIATION OPERATING CIRCUIT** *(24)*

**MEMBERSHIP FUNCTION GENERATING CIRCUIT** *(25)*

**PREDICTION OPERATING CIRCUIT** *(30)*

**PRIORITY JUDGING CIRCUIT** *(31)*

**RELIABILITY OPERATING CIRCUIT** *(32)*

**OUTPUT CIRCUIT** *(33)*

**FUZZY LABEL GENERATING CIRCUIT** *(42)*

**CONCLUSION OPERATING CIRCUIT** *(43)*

EP 0 574 011 A2

22